# EUROPEAN PATENT APPLICATION

(11) **EP 4 156 738 A1**
(43) Date of publication of application: **29.03.2023**
(21) Application number: 21809839.0
(22) Date of filing: 12.05.2021
(51) Int. Cl.: H04W 8/22, H04W 4/00, H04W 28/14, H04W 84/10, H04W 88/04, H04W 88/06

(54) **INFORMATION TRANSMISSION SYSTEM**

(30) Priority: 22.05.2020 JP 2020089818
(71) Applicant: National Institute of Information and Communications Technology, Koganei-shi, Tokyo 184-8795 (JP)
(72) Inventor: SHOJI Yozo, Koganei-shi, Tokyo 184-8795 (JP)
(74) Representative: Rings, Rolf
(86) International application number: PCT/JP2021/018048
(87) International publication number: WO 2021/235290

(57) **Abstract**

[Problem]

To provide an information transmission system that allows transmitting large-capacity content information at low cost and high speed.

[Solution]

The information transmission system includes: an information source station 2 that holds transmission information to be transmitted to a destination station 3; and movable bodies 4 that are movable and relay the transmission information held by the information source station 2 to the destination station 3. The movable bodies 4 include: a first movable body 4a that receives the transmission information from the information source station 2 at a close position by wireless communication in a millimeter wave band and temporarily stores the transmission information; and a second movable body 4b that temporarily stores the transmission information relayed from the first movable body 4a. The first movable body 4a or the second movable body 4b transmits the temporarily stored transmission information to the destination station 3 at a close position by the wireless communication in the millimeter wave band. The information source station 2, the destination station 3, and the movable bodies 4 mutually transmit and receive guide information to guide the movable body 4 to a close position of the information source station 2 or a close position of the destination station 3 for the wireless communication of the transmission information in the millimeter wave band through a microwave band.

## Description

### TECHNICAL FIELD

The present invention relates to an information transmission system that transmits information from an information source station to a destination station and particularly relates to an information transmission system that preferably transmits large-capacity content information at low cost and high speed to a remote region where a radio wave cannot directly reach and a separated place in the same building to further activate sharing/consumption of information in a region or between regions.

### BACKGROUND ART

While a social challenge in accordance with an increase in aged household is revealed in association with aging society with a low birth rate, not only a demand for watching old persons indoors/outdoors, but also demands for means of provision of information to aged household not familiar with IT literacy and conversely transmission means of, for example, a situation of an old person have been increasing.

In many cases, the old person not familiar with IT literacy tends to not actively utilize a network, such as subscription of an optical fiber line and the latest broadband line. Accordingly, for example, it has been becoming difficult in this circumstance that establishment of the infrastructure for information distribution and information collection for old persons for public purpose in which multimedia and large capacity of content would be advanced more and more in the future (see, for example, Non-Patent Document 1).

Especially, maintenance of information collection/distribution environment using a technique, such as a high-speed wireless access line, which has been recently quantum, in a less-populated area is extremely inefficient, and a problem arises in that time is required for laying the infrastructure.

Additionally, even when it is not an information collection/distribution system targeting the aged household or the like, and when the infrastructure, such as an optical fiber, is not sufficiently maintained in an area even in a situation where, for example, information collection/distribution including application in a business field, such as crime prevention, disaster prevention, sightseeing, and commerce, is required in a range of a comparatively limited short distance, such as an inside of the same building, an inside of a station yard, and an underground city, smooth distribution and collection of, for example, ultra-broadband content between different bases are difficult or require a considerable cost.

As described above, in the information network infrastructure base as the information collection/distribution base, laying the wired network using the optical fiber or the like requires an enormous cost. To establish the information network infrastructure base, not the wired network but the wireless network should be persistently put at the center. Especially, in a process of recent spread of the fifth generation mobile communication system (5G), it is expected that, for example, improvement in ultrawideband communicability (ultrahigh speed communicability), advance in a wireless access technique achieving an accommodating many devices, and further advance in a wireless access system appropriate for utilization of IoT sensor data, such as Low Power Wide Area (LPWA), having a low speed but at low cost and having a wide area property. Thus, a social demand for establishment of an information network infrastructure using wireless communication is considerably high.

On the other hand, since a wireless communication system with 5G utilizes a frequency in a millimeter wave band as a communication resource to achieve ultrahigh speed communicability, wide area expansion of this factually causes a laying cost equivalent to a case of laying a wired network using an optical fiber or the like. In view of this, to maintain the broadband network environment in a less-populated area where establishment of the information network infrastructure base is urgent need, a considerable period is probably required.

Non-Patent Document 1: M. C. Lucas-Estan and J. Gozalvez, "Mode Selection for 5G Heterogeneous and Oppotunistric Networks" in IEEE Access, vol 7, pp. 113511-113524, 2019

### DISCLOSURE OF THE INVENTION

### PROBLEMS TO BE SOLVED BY THE INVENTION

The present invention has been invented in consideration of the above-described problems, and its object is to provide an information transmission system that transmits information from an information source station to a destination station, and especially an information transmission system that allows transmitting large-capacity content information to a remote area at low cost and high speed.

### SOLUTIONS TO THE PROBLEMS

An information transmission system according to a first invention transmits information from an information source station to a destination station. The information transmission system includes an information source station and movable bodies. The information source station holds transmission information to be transmitted to the destination station. The movable bodies are movable and relay the transmission information held by the information source station to the destination station. The movable bodies include a first movable body and a second movable body. The first movable body receives the transmission information from the information source station at a close position by wireless communication in a millimeter wave band and temporarily stores the transmission information. The second movable body temporarily stores the transmission information relayed from the first movable body and the first movable body. The first movable body or the second movable body transmits the temporarily stored transmission information to the destination station at a close position by the wireless communication in the millimeter wave band. The information source station, the destination station, and the movable bodies mutually transmit and receive guide information to guide the movable body to a close position of the information source station or a close position of the destination station for the wireless communication of the transmission information in the millimeter wave band through a microwave band.

In an information transmission system according to a second invention, which is in the first invention, the movable bodies include: one or a plurality of other movable bodies that relay the transmission information stored by the first movable body to the second movable body; and mutually transmit and receive guide information for guide to mutual close positions through the microwave band to relay the transmission information between the respective movable bodies by the wireless communication in the millimeter wave band.

An information transmission system according to a third invention, which is in the first invention or the second invention, further includes a relay station. The relay station receives the transmission information from the one movable body at a close position by the wireless communication in the millimeter wave band and temporarily stores the transmission information. The relay station relays the stored transmission information from the other movable body at a close position by transmitting the transmission information by the wireless communication in the millimeter wave band. The relay station transmits and receives the guide information for guide to the close position with the one movable body or the other movable body through the microwave band.

In an information transmission system according to a fourth invention, which is in any of the first invention to the third invention, the movable body is a vehicle that includes a guide display unit to guide a driver to the close position based on the received guide information, or a vehicle that includes a movement guide unit to promote autonomous movement to the close position based on the received guide information.

An information transmission system according to a fifth invention, which is in the third invention, further includes a total control server. The total control server is configured to obtain location information of the information source station, the destination station, the relay station, and the movable bodies and respective situations of the transmission information held or temporarily stored by the information source station, the destination station, the relay station, and the movable bodies. The total control server transmits guide notification for guide to respective close position of the information source station, close position of the destination station, and close position of the relay station based on the obtained location information and respective situations of the transmission information.

An information transmission system according to a sixth invention, which is in the first invention or the third invention, each of the movable bodies that relays the transmission information is constituted by a movable robot. The guide information mutually transmitted and received through the microwave band includes any of one or more of information on a mutual distance, information on receiving sensitivity and a reception level of a signal in the millimeter wave band, information on an installation position or a direction of an antenna for the wireless communication in the millimeter wave band, and information on a received power level of the wireless communication in the millimeter wave band. Each of the movable bodies performs a processing operation to achieve the wireless communication in the millimeter wave band based on each piece of the information included in the guide information received from another side.

### EFFECTS OF THE INVENTION

According to the present invention having the above-described configuration, when the transmission information is transmitted from the information source station to the destination station, suppose that, even when the transmission information includes large-capacity content, relaying it via the movable bodies allows high speed transmission at low cost. The relay by the movable bodies is supported based on the guide information included in a beacon packet in the microwave band, and therefore smooth relay can be achieved.

### BRIEF DESCRIPTION OF THE DRAWINGS

Fig. 1 is a drawing illustrating a concept of an information network infrastructure base 6 to which an information transmission system that applies the present invention is applied.
Fig. 2 is a drawing illustrating a transmission concept of transmission information in the information transmission system.
Fig. 3 is a drawing for describing an example of directly transmitting and receiving the transmission information between movable bodies without via a relay station.
Fig. 4 is a drawing for describing an example of relaying the transmission information by the three or more movable bodies.
Fig. 5 is a drawing for describing an example of transmitting guide notification from a total control server to an information source station, a destination station, a relay station, and the movable bodies.
Fig. 6 is a drawing for describing an example of detouring the movable body to be in charge of the transmission information.
Fig. 7 is a drawing for describing an operation example when a robot is the movable body.
Fig. 8 is a drawing illustrating an example of transmitting the transmission information by a first movable body constituted by a robot moving from the information source station to a corner portion and a second movable body constituted by a robot moving from the corner portion to the destination station.
Fig. 9 is a sequence diagram when wireless communication is performed between the movable bodies and a fixed station (the information source station, the destination station, and the relay station).

### DESCRIPTION OF PREFERRED EMBODIMENTS

The following describes an information transmission system that applies the present invention in detail with reference to the drawings.

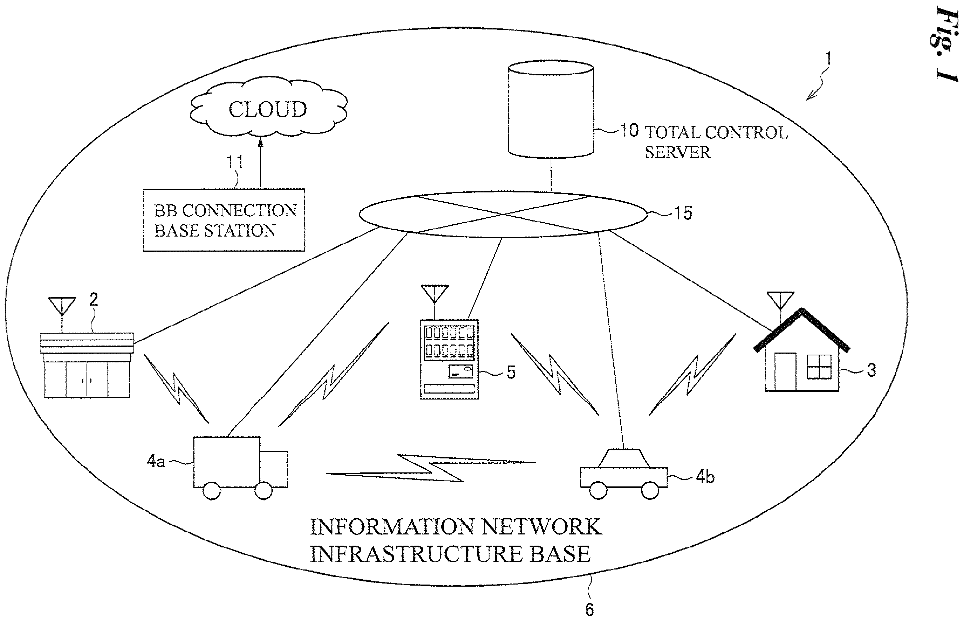

Fig. 1 is a drawing illustrating a concept of an information network infrastructure base 6 to which an information transmission system 1 that applies the present invention is applied. The information network infrastructure base 6 serves as a base that shares various kinds of transmission information generated in each region (area) between an information source station 2 and another destination station 3 or transmits the transmission information from the information source station 2 to the destination station 3. In addition to sharing and transferring the transmission information from each of the information source stations 2 to the destination station 3, this information transmission system 1 especially feeds back it to each region to actively prompt the utilization and provides a base for consumption.

Around the outer peripheries of the respective areas constituting the information network infrastructure base 6, a mobile base that actually carries persons and objects is deployed, in addition to a lifeline base that provides, for example, electricity, gas, and a water system required for people to live or work and a fixed base (such as a building and an apartment, a detached house, a station, a retail shop, a nursery school, an elder care facility, an electrical power plant, a post office, a vending machine, and various infrastructures) required to live or work. This mobile base is constituted by movable bodies 4, such as a vehicle, a bus, a motor truck, a taxi, a drone, an aircraft, and a robot, and moves the inside and outside of each area only for the purpose of carrying a person and an object to the respective destinations.

Various kinds of transmission information are generated in each area constituting the information network infrastructure base 6. For example, the transmission information indicative of a necessary for watching an old person and a schoolchild on the way to and from school is generated. Additionally, in a case where it is difficult for a resident in a less-populated area to purchase commodities, the transmission information including a desire for purchase is generated. Additionally, the transmission information seeking for rescue in various events and troubles actually occurred in each area, such as a traffic accident, a crime, and a natural disaster, is generated. Additionally, the transmission information formed of large-capacity content, such as a movie for providing amusement in a less-populated area, is generated. Additionally, a case in which data required for telemedicine, which is recently advancing, is transmitted mutually between regions occurs. Further, the transmission information on various events occurring in each area and demands from customers for tourist business and each business is generated.

That is, in each area where the information network infrastructure base 6 is configured, with an example of watch, shopping refugee, traffic safety, crime prevention, disaster prevention and disaster mitigation, amusement, tourist business and commerce, patrol (order-taker) businesses, a rescue request and a demand from the customer according to each of a trouble and an event occur in each area, and the transmission information reflecting the rescue request, the demand, and the like is generated. The transmission information is thus generated, or the transmission information generated in each region is transmitted, and the information source station 2 temporarily holds this transmission information. The transmission information is information assumed to be transmitted to the destination station 3 that desires its acquisition, and therefore the transmission information includes information on the destination desired to be transmitted. Therefore, in the information network infrastructure base 6, a processing operation for transmission of this transmission information from the information source station 2 to the destination station 3 equivalent to the destination desired to be transmitted is performed. That is, when the information source station 2 holds this transmission information, the transmission information is transmitted to the destination station 3 that desires its acquisition or is shared between the information source station 2 and the destination station 3. Thus, optimal service and assist or optimal information distribution can be provided to each area.

In the information transmission system 1 that applies the present invention, the transmission information held by the information source station 2 is not transmitted to the destination station 3 via a public communication network in which a wired network is laid, but the transmission information is caused to be delivered by the movable bodies 4. The movable bodies 4 move between the inside and outside of each area for the purpose of carrying a person and an object to the respective destinations as described above. Incidentally, there may be a case where the certain movable bodies 4 pass through the proximity of the information source station 2 and further is in the middle of moving in a direction of approaching the destination station 3, not a direction opposite to the destination station 3. In this case, a movable body 4a receives the transmission information from the information source station 2 and delivers it toward the destination station 3. However, the destination of this movable body 4a does not always match the destination station 3 and often heads for the direction different from the direction of the destination station 3 in its course. On the other hand, when another movable body 4b and the movable body 4a pass by each other, and the direction of the destination of the other movable body 4b is the direction heading for the destination station 3, the movable body 4a transmits this transmission information to this other movable body 4b. The other movable body 4b that has received the transmission information delivers it to the destination station 3. Then, the other movable body 4b transmits the temporarily stored transmission information to the destination station 3. Thus, relay of the transmission information from the information source station 2 to the destination station 3 via the movable bodies 4 is achieved.

While an example of relaying the transmission information by the two movable bodies 4a, 4b has been described in the example of Fig. 1, the configuration is not limited to this, and one or more movable bodies 4 that relay the transmission of this transmission information may be interposed between the two movable bodies 4a, 4b.

Additionally, between the movable bodies 4a, 4b, one or more relay stations 5 that relay the transmission of the transmission information may be further interposed.

Further, in the information transmission system 1 that applies the present invention, a total control server 10 that controls and manages the information source station 2, the destination station 3, the movable bodies 4, and the relay station 5 constituting this information network infrastructure base 6 may be provided.

The following describes the information source station 2, the destination station 3, the movable bodies 4, the relay station 5, and the total control server 10 constituting this information network infrastructure base 6 in detail.

The information source station 2 is a station that generates and holds the transmission information that the destination station 3 desires to receive or is a station that stores the transmission information generated from another information source and holds it. The information source station 2 is installed in a target almost always installed in each region area, such as a convenience store and a drugstore, a bank, a post office, a police box, and a vending machine. Actually, this information source station 2 only needs to be embodied as a general wireless router, and as necessary, may include a recording medium configured to store the transmission information formed by large-capacity data. Especially, this information source station 2 may play a role as one information accumulation base that stores the transmission information generated in a collective housing, such as an apartment, and a detached residential street. One information source station 2 may be installed in each residence. In this case, a millimeter wave antenna is incorporated into a mailbox installed in the proximity of an entrance of a residence, and a wireless router connected to this antenna is installed in each residence, thus ensuring achieving the information source station 2.

The information source station 2 has a function of transmitting and receiving the transmission information in the millimeter wave band (or a terahertz band at a higher frequency). Additionally, the information source station 2 also has a function of transmitting and receiving a beacon packet in a microwave. The information source station 2 superimposes information for guiding the movable bodies 4 to own close position on the beacon packet in this microwave and periodically transmits it. This information source station 2 also has a function of controlling the transmission cycle of the beacon packets.

The guide information here includes information indicative of a position of the information source station 2 and an attribute of the information source station 2. A side that receives the beacon packet through the information indicative of the attribute of the information source station 2 allows identifying that the transmission source is the information source station 2. This guide information includes at least any one of an accurate absolute position or relative position where the information source station 2 can communicate with own station in a millimeter wave band, information on a gain and directivity of an appropriate millimeter wave band antenna that should be used at the position, and information on an adequate reception level and a lowest receivable level. Further, a type and a name of the content of the transmission information that the information source station 2 holds and further information on the destination are described in this guide information.

The following gives a description with an example of the information source station 2 fixed to one position as a wireless router. However, the information source station 2 is not limited to this, and may be movably configured. In this case, the wireless router constituting this information source station 2 may be mounted on a vehicle, a bus, a motor truck, a taxi, a drone, an aircraft, a robot, and the like to be movable. In this case, the information source station 2 may include a moving state, such as own speed and acceleration, in the above-described guide information.

The destination station 3 is a station to which the relayed transmission information transmitted from the information source station 2 is delivered. The destination station 3 is installed in a target almost always installed in each region area, such as a convenience store and a drugstore, a bank, a post office, a police box, and a vending machine. Actually, this destination station 3 only needs to be embodied as a general wireless router, and as necessary, may include a recording medium configured to store the transmission information formed by large-capacity data. Especially, this destination station 3 may play a role as one information distribution base that distributes the transmission information to a collective housing, such as an apartment, and a detached residential street. Except for this, one destination station 3 may be installed in each residence. In this case, a millimeter wave antenna is incorporated into a mailbox installed in the proximity of an entrance of a residence, and a wireless router connected to this antenna is installed in each residence, thus ensuring achieving the destination station 3.

The destination station 3 has a function of transmitting and receiving the transmission information in the millimeter wave band (a terahertz band). Additionally, the destination station 3 also has a function of transmitting and receiving the beacon packet in the microwave. The destination station 3 superimposes information for guiding the movable bodies 4 to own close position on the beacon packet in this microwave and periodically transmits it. This destination station 3 also has a function of controlling the transmission cycle of the beacon packets.

The guide information included in the beacon packet and transmitted by the destination station 3 includes information indicative of a position of the destination station 3 and an attribute of the destination station 3. A side that has received the beacon packet through the information indicative of the attribute of the destination station 3 allows identifying that the transmission source is the destination station 3. This guide information includes at least any one of an accurate absolute position or relative position where the destination station 3 can communicate with own station in a millimeter wave band, information on a gain and directivity of an appropriate millimeter wave band antenna that should be used at the position, and information on an adequate reception level and a lowest receivable level. Further, a type and a name of the content of the desired transmission information that the destination station 3 desires to receive are described in this guide information.

The following gives a description with an example of the destination station 3 fixed to one position as a wireless router. However, the destination station 3 is not limited to this, and may be movably configured. In this case, the wireless router constituting this destination station 3 may be mounted on a vehicle, a bus, a motor truck, a taxi, a drone, an aircraft, a robot, and the like to be movable. In this case, the destination station 3 may include a moving state, such as own speed and acceleration, in the above-described guide information.

The movable bodies 4 are embodied as any transportation means that can deliver a person and an object, such as a vehicle, a bus, a motor truck, a taxi, a drone, an aircraft, and a robot. An antenna, a wireless router, and a recording medium configured to store the transmission information are mounted on this movable body 4. The movable bodies 4 have a function of transmitting and receiving the transmission information in the millimeter wave band (a terahertz band). Additionally, the movable bodies 4 also have a function of transmitting and receiving the beacon packet in the microwave. The movable bodies 4 superimpose the guide information required for the movable bodies 4 themselves to approach the close positions of the information source station 2 and the destination station 3 on the beacon packet in the microwave and then periodically transmits it.

The guide information included in the beacon packet and transmitted by the movable bodies 4 includes information indicative of positions of the movable bodies 4 and attributes of the movable bodies 4. A side that has received the beacon packet through the information indicative of the attribute of the movable body 4 allow identifying that the transmission source is the movable body 4. Additionally, the guide information includes a moving state, such as own speed and acceleration of the movable body 4. This guide information includes at least any one of an accurate absolute position or relative position where the movable bodies 4 can communicate with themselves in a millimeter wave band, information on a gain and directivity of an appropriate millimeter wave band antenna that should be used at the position, and information on an adequate reception level and a lowest receivable level. Further, a type and a name of the content of the transmission information that the movable bodies 4 can provide or a type and a name of the content of the transmission information that the movable bodies 4 desire to obtain are described in this guide information.

The relay station 5 receives the transmission information delivered by the movable bodies 4 in the millimeter wave band and temporarily stores it. Additionally, this relay station 5 achieves so-called a relay function that transmits this temporarily stored transmission information to another movable body 4 in the millimeter wave for transmission to another movable body 4. The relay station 5 is installed in a target almost always installed in each region area, such as a convenience store and a drugstore, a bank, a post office, a police box, and a vending machine. Actually, this relay station 5 only needs to be embodied as a general wireless router, and as necessary, may include a recording medium configured to store the transmission information formed by large-capacity data. The relay station 5 also has a function of transmitting and receiving the beacon packet in the microwave. The relay station 5 superimposes the guide information required for the movable bodies 4 to approach the close position of the relay station 5 itself on the beacon packet in this microwave and periodically transmits it.

The guide information transmitted by the relay station 5 includes information indicative of a position of the relay station 5 and an attribute of the relay station 5. A side that has received the beacon packet through the information indicative of the attribute of the relay station 5 allows identifying that the transmission source is the relay station 5. This guide information includes at least any one of an accurate absolute position or relative position where the relay station 5 can communicate with own station in a millimeter wave band, information on a gain and directivity of an appropriate millimeter wave band antenna that should be used at the position, and information on an adequate reception level and a lowest receivable level. Further, a type and a name of the content of the transmission information that the information source station 2 holds and further information on the destination are described in this guide information.

The total control server 10 grasps and manages past and current positions in the above-described information source station 2, destination station 3, movable bodies 4, and relay station 5. Additionally, the total control server 10 especially predicts future positions of the movable bodies 4 that moves by the minute from the past and current location information. Additionally, the total control server 10 functions as grasping and managing the content, the attribute, the type, and the like of the transmission information held by the information source station 2, the transmission information in a delivery process by the movable bodies 4 that receive it from the information source station 2, the transmission information temporarily stored by the relay station 5, and further the transmission information that the destination station 3 desires to receive.

The total control server 10 is connected to the information source station 2, the destination station 3, the movable bodies 4, and the relay station 5 via a public communication network 15 and can mutually transmit and receive information via what is called the Internet. This total control server 10 can transmit a request for various kinds of information to the information source station 2, the destination station 3, the movable bodies 4, and the relay station 5 via the public communication network 15. The information source station 2, the destination station 3, the movable bodies 4, or the relay station 5 that has received this request transmits the information requested by the total control server 10 via the public communication network 15. Based on the method, this total control server 10 can obtain the information on the position at the information source station 2, the destination station 3, the movable bodies 4, or the relay station 5, the content, the attribute, the type, and the like of the transmission information desired by itself and eventually can manage them. Additionally, the total control server 10 can transmit various notifications to the information source station 2, the destination station 3, the movable bodies 4, and the relay station 5, and eventually can control them.

Note that the information network infrastructure base 6 may further include a broadband (BB) connection base station 11. This BB connection base station 11 functions to receive content data of the large-capacity transmission information held by the information source station 2 and the relay station 5 in the millimeter wave band and upload this to a server on a cloud. Additionally, this BB connection base station 11 functions to download the content data of the transmission information by the capacity saved in the server on the cloud and transmit this to the relay station 5 and the destination station 3 in the millimeter wave band. Besides, this BB connection base station 11 may have roles and functions of the information source station 2, the destination station 3, the movable bodies 4, and the relay station 5. In this case, this BB connection base station 11 may include the above-described guide information in the beacon packet in transmission of the beacon packet in the microwave or can decode the above-described guide information superimposed on the beacon packet in the microwave.

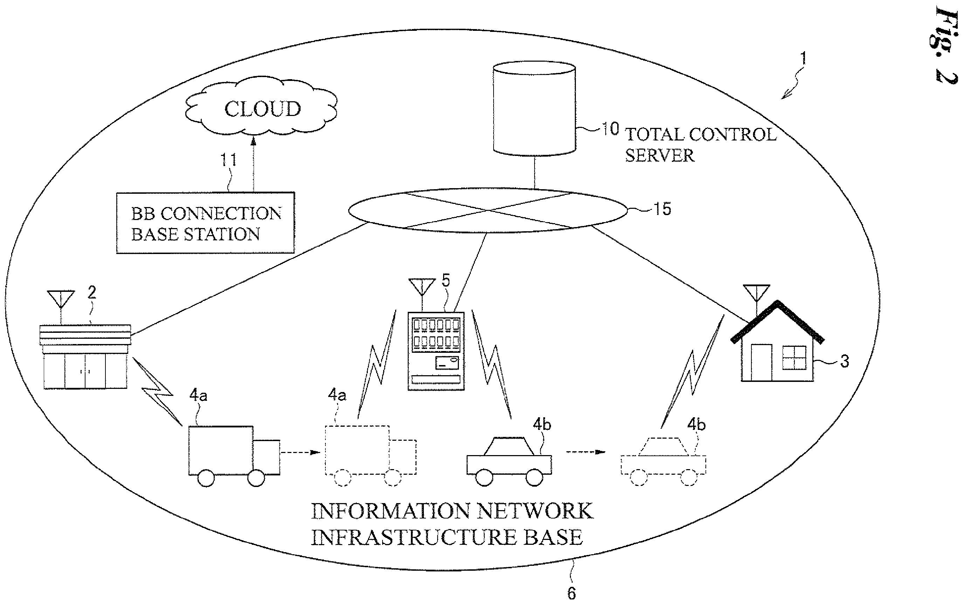

Next, an operation of the information transmission system 1 that applies the present invention will be described. As illustrated in Fig. 2, in an operation example described below, one movable body 4a first receives the transmission information held by the information source station 2, and the one movable body 4a moves up to the close position of the relay station 5. Then, one movable body 4a transmits the transmission information to the relay station 5, and the relay station 5 temporarily stores the transmission information. Next, another movable body 4b that has traveled up to the close position of this relay station 5 relays the transmission information from the relay station 5, moves up to the close position of the destination station 3, and transmits this transmission information to the destination station 3.

Usually, each of the information source station 2, the destination station 3, the movable bodies 4, and the relay station 5 transmits the beacon packet in the microwave. The guide information included in the beacon packet transmitted by each of the information source station 2, the destination station 3, the movable bodies 4, and the relay station 5 is as described above. Among them, the information source station 2 holding the transmission information periodically transmits the beacon packet including the type and the name of the held transmission information and the destination in the guide information, in addition to own position.

The beacon packet transmitted from the information source station 2 is expected to be received by the movable body 4a traveling within a range of from 100 to 1000 m even outside of its line of sight due to the property of the microwave (communication used between spots where any line of sight cannot be obtained due to, for example, a building and a mountain since a distance between a transmission point and a reception point is far). The movable body 4a can identify presence of the information source station 2 that holds the transmission information in the proximity thereof from the guide information included in the beacon packet received from the information source station and also can identify the type and the name and the destination of the transmission information.

The movable body 4a determines whether to relay this transmission information from this guide information. When the movable body 4a is a vehicle, a driver of the vehicle makes the determination. In this case, the guide information is displayed as navigation information inside a company, the information source station 2 holds the transmission information, and the destination is displayed for the driver for notification. Additionally, the position of the information source station 2 with the current position of the movable body 4a as a base point is displayed for the driver for notification.

The driver of the movable body 4a confirms the guide information, approaches the proximity of the information source station 2, and determines whether to relay the transmission information. In a case where, in the information network infrastructure base 6, suppose that the movable bodies 4 play a role in relaying the transmission information, a rule for giving some sort of benefit is created in advance to create incentive brought by playing a role in relaying the transmission information for the movable body 4. The driver of the movable body 4a determines whether to play a role in relaying the transmission information in a relationship with the incentive. Consequently, when the driver determines to play a role in relaying the transmission information, the driver drives the movable body 4a toward the close position of the information source station 2. At this time, to guide to the close position of the information source station 2, the navigation information based on the location information of the information source station 2 may be displayed. Especially, when the destination of the movable body 4a is in the proximity of the destination of the transmission information or the directions are the same up to the middle of the destination, even when the time is slightly taken, relaying the transmission information causes no big disadvantage, and further the benefit is given, and therefore an advantage is given to the driver. On the other hand, when the driver of the movable body 4a determines not to play a role in relaying the transmission information, the driver ignores the received guide information and continues driving toward own destination.

Suppose that the movable body 4a is an autonomous driving car or a semi-autonomous driving car, regardless of intention of the driver for determination of whether to relay this transmission information, the movable body 4a may autonomously make determination. In this case, whether to perform relay is determined based on, in addition to the relative positional relationship of the information source station 2 to the movable body 4a, the relationship between the destination of the movable body 4a and the destination of the transmission information, the type, the name, and the content of the transmission information, and further the incentive given by the relay. Then, when it is determined that the movable body 4a relays the transmission information, the direction is changed toward the information source station 2 as necessary, and autonomous driving is performed so as to approach the information source station 2.

The beacon packet formed by the microwave transmitted from the information source station 2 is received by all movable bodies 4a that travel in the range of from 100 to 1000 m around the information source station 2, and each of the movable bodies 4a determines whether to perform the relay described above. Only the movable body 4a that determines to desire the relay of the transmission information among these respective movable bodies 4a approaches the information source station 2.

Incidentally, not only each of the movable bodies 4a receiving the beacon packet in the microwave band, but also continues periodically transmitting the beacon packet by itself. The information source station 2 that has received the beacon packet transmitted from this movable body 4a can identify the presence of the movable body 4a traveling in the range of from 100 to 1000 m around the information source station 2. Additionally, reading the guide information included in the beacon packet received from the movable body 4a by the information source station 2 allows identifying the current position and the moving state (the speed and acceleration) of the movable body 4a.

When the movable body 4a approaches the close position where a signal in the millimeter wave band in the information source station 2 is receivable, the transmission information is transmitted from the information source station 2 to the movable body 4a. Usually, it is necessary for transmission of the transmission information at the adequate transmission speed that the antenna provided with the information source station 2 and the antenna provided with the movable body 4a mutually approach in the appropriate distance and the maximum radiation directions of the respective antennas provided with them are adjusted to be opposed to one another. The movable body 4a uses at least any of the accurate absolute position or relative position where communication in the millimeter wave band regarding the information source station 2 is possible, the information on the gain and directivity of the appropriate millimeter wave band antenna that should be used at the position, and the information of the adequate reception level and the lowest receivable level already received with the beacon packet to adjust own position and the direction of the antenna. Thus, the movable body 4a receives the transmission information from the information source station 2 at the close position by wireless communication in the millimeter wave band and temporarily stores this. The movable body 4a travels toward own destination with the transmission information stored. A signal at considerably high frequency, such as a millimeter wave band, is advantageous in that a frequency width (a frequency bandwidth) generally used in communication can be considerably widely used, and a considerably large information volume can be transmitted and received per unit time. Additionally, since a wavelength as a reciprocal of the frequency, such as the millimeter wave band, is considerably short, various devices can be considerably downsized, and eventually downsizing of the devices and low power consumption of the devices are possible.

Note that when a plurality of the movable bodies 4a approach, the information source station 2 may transmit the transmission information to all of the plurality of the approaching movable bodies 4a or may select and narrow down one or the plurality of desired movable bodies 4a and transmit the transmission information only to the movable body 4a. When the desired movable body 4a is narrowed down, for example, the desired movable body 4a may be narrowed based on the cost requested as a compensation for transmission of the transmission information presented by the movable body 4a. Alternatively, for example, the desired movable body 4a may be narrowed down based on a future movement path predicted based on the movement path of the movable body 4a up to the present. In this case, the desired movable body 4a may be narrowed down based on destination information included in the guide information transmitted from the movable body 4a or based on the prediction result of the future movement path of the movable body 4a obtained by querying to a server or the like separately provided on the network with which information on the previous movement path and a movement habit of the movable body 4a is registered. The movement path is predicted for each of the plurality of movable bodies 4a. Then, the movable body 4a whose predicted movement path is further close to the destination of the transmission information may be selected in sequence.

The movable body 4a that has received the transmission information from the information source station 2 and temporarily stores it travels toward the destination while continuing periodically transmitting a beacon signal in the microwave band in the process.

At this time, when the movable body 4a enters within the range of from 100 to 1000 m from the relay station 5, the beacon packet transmitted from the relay station 5 is received by this movable body 4a. The movable body 4a can identify the presence of the relay station 5 that relays the transmission information in the proximity thereof from the guide information included in the beacon packet received from the relay station 5 or can identify the position of the relay station 5.

At this time, the relay station 5 also receives the beacon packet transmitted from the movable body 4a. The type and the name and the destination of the transmission information primarily stored by the movable body 4a can be identified from the beacon packet received by this relay station 5.

The movable body 4a, and eventually, the driver thereof, determine whether to relay this transmission information from the guide information received from the relay station 5 to the relay station 5. In a case where the relay to the relay station 5 causes a large bypass for the movable body 4a in the process of heading for the destination and an arrival time to the destination delays, the movable body 4a ignores the relay station 5 and waits for reception of the beacon packet from another relay station 5. On the other hand, even when the relay to the relay station 5 becomes a bypass, in a case where there is an advantage in the relay to this relay station 5 in the relationship with the benefit, the movable body 4a is caused to approach there.

Suppose that the movable body 4a is an autonomous driving car or a semi-autonomous driving car, regardless of intention of the driver for determination of whether to relay this transmission information to the relay station 5, the movable body 4a may autonomously make determination. In this case, whether to cause the relay station 5 to perform relay is determined based on, in addition to the relative positional relationship of the relay station 5 to the movable body 4a, the relationship between the destination of the movable body 4a and the destination of the transmission information, the type, the name, and the content of the transmission information, and further the incentive given by the relay. Then, when it is determined that the movable body 4a causes this relay station 5 to relay the transmission information, the direction is changed toward this relay station 5 as necessary, and autonomous driving is performed so as to approach this relay station 5.

When the movable body 4a approaches the close position where a signal in the millimeter wave band in the relay station 5 is receivable, the transmission information is transmitted from the movable body 4a to the relay station 5. The relay station 5 receives the transmission information from the movable body 4a at the close position by wireless communication in the millimeter wave band and temporarily stores it. When completing the transmission of the transmission information, the movable body 4a travels toward own destination. Similarly, in the case where the wireless communication in the millimeter wave band is performed from the movable body 4a toward the relay station 5, for transmission of the transmission information at the adequate transmission speed, adjustment needs to be performed such that the antenna provided with the relay station 5 and the antenna provided with the movable body 4a mutually approach within the appropriate distance while the maximum radiation directions of the antennas provided with the respective relay station 5 and movable body 4a are opposed to one another. The movable body 4a uses at least any of the accurate absolute position or relative position where communication in the millimeter wave band regarding the relay station 5 is possible, the information on the gain and directivity of the appropriate millimeter wave band antenna that should be used at the position, and the information of the adequate reception level and the lowest receivable level already received with the beacon packet to adjust own position and the direction of the antenna. Thus, the movable body 4a transmits the transmission information to the relay station 5 at the close position by wireless communication in the millimeter wave band.

The relay station 5 that temporarily stores the transmission information periodically continues transmitting the beacon packet. The beacon packet transmitted from the relay station 5 is received by the movable body 4b that travels within the range of from 100 to 1000 m due to the property of microwave. The movable body 4b can identify the presence of the relay station 5 that holds the transmission information in the proximity thereof from the guide information included in the beacon packet received from the relay station 5 or can identify the type, the name, and the destination of the transmission information.

The movable body 4b determines whether to relay this transmission information from this guide information. When the movable body 4b is a vehicle, a driver of the vehicle makes the determination. In this case, the guide information is displayed as navigation information inside a company, the relay station 5 holds the transmission information, and which is the destination is displayed for the driver for notification. Additionally, the position of the relay station 5 with the current position of the movable body 4b as a base point is displayed for the driver for notification.

The driver of the movable body 4b confirms the guide information, approaches the proximity of the relay station 5, and determines whether to relay the transmission information. In a case where, in the information network infrastructure base 6, suppose that the movable bodies 4 play a role in relaying the transmission information, a rule for giving some sort of benefit is created in advance to create incentive brought by playing a role in relaying the transmission information for the movable bodies 4. The driver of the movable body 4b determines whether to play a role in relaying the transmission information in a relationship with the incentive. Consequently, when the driver determines to play a role in relaying the transmission information, the driver drives the movable body 4b toward the close position of the relay station 5. On the other hand, when the driver of the movable body 4b determines not to play a role in relaying the transmission information, the driver ignores the received guide information and continues driving toward own destination.

Suppose that the movable body 4b is an autonomous driving car or a semi-autonomous driving car, regardless of intention of the driver for determination of whether to relay this transmission information, the movable body 4b may autonomously make determination. Since the autonomous determination method and the control method in the case are similar to the description supposing that the movable body 4a is an autonomous driving car or a semi-autonomous driving car, the following omits the description.

The beacon packet formed by the microwave transmitted from the relay station 5 is received by all movable bodies 4b that travel in the range of 100 to 1000 m around the relay station 5, and each of the movable bodies 4b determines whether to perform the relay described above. Only the movable body 4b that determines to desire the relay of the transmission information among these respective movable bodies 4b approaches the relay station 5.

Incidentally, not only each of the movable bodies 4b receiving the beacon packet in the microwave band, but also continues periodically transmitting the beacon packet by itself. The relay station 5 that has received the beacon packet transmitted from this movable body 4b can identify the presence of the movable body 4b traveling in the range of from 100 to 1000 m around the relay station 5. Additionally, reading the guide information included in the beacon packet received from the movable body 4b by the relay station 5 allows identifying the current position and the moving state (the speed and acceleration) of the movable body 4b.

When the movable body 4b approaches the close position where a signal in the millimeter wave band in the relay station 5 is receivable, the transmission information is transmitted from the relay station 5 to the movable body 4b. Similarly to the case of performing the wireless communication in the millimeter wave band from the relay station 5 to the movable body 4b, it is necessary for transmission of the transmission information at the adequate transmission speed that the antenna provided with the relay station 5 and the antenna provided with the movable body 4b approach one another in the appropriate distance and the maximum radiation directions of the respective antennas provided with them are adjusted to be opposed to one another. The movable body 4b uses at least any one of the accurate absolute position or relative position where communication in the millimeter wave band is possible, the information on the gain and directivity of the appropriate millimeter wave band antenna that should be used at the position, and the information of the adequate reception level and the lowest receivable level to adjust own position and the direction of the antenna. Thus, wireless communication in the millimeter wave band is performed with the relay station 5 at the close position.

Note that when the plurality of the movable bodies 4b approach, the relay station 5 may transmit the transmission information to all of the plurality of the approaching movable bodies 4b or may select and narrow down one or the plurality of desired movable bodies 4b and transmit the transmission information only to the movable body 4b. When the desired movable body 4b is narrowed down, for example, the desired movable body 4b may be narrowed based on a future movement path predicted based on the movement path of the movable body 4a up to the present. The prediction method of the movement path is similar to the route prediction of the movable body 4a described above.

The movable body 4b that receives the transmission information from the relay station 5 and temporarily stores it travels toward the destination while continuing periodically transmitting a beacon signal in the microwave band in the process.

At this time, when the movable body 4b enters within the range of from 100 to 1000 m from the destination station 3, the beacon packet transmitted from the destination station 3 is received by this movable body 4b. The movable body 4b can identify the presence of the destination station 3 that desires to receive the transmission information in the proximity thereof from the guide information included in the beacon packet received from the destination station 3 or can identify the position of the destination station 3.

At this time, the destination station 3 also receives the beacon packet transmitted from the movable body 4b. The type and the name and the destination of the transmission information primarily stored by the movable body 4b can be identified from the beacon packet received by this destination station 3.

The movable body 4b and eventually the driver thereof causes the movable body 4b to approach toward this destination station 3 to transmit this transmission information from the guide information received from the destination station 3 to the destination station 3. When the movable body 4b approaches the close position where the signal in the millimeter wave band in the destination station 3 is receivable, the transmission information is transmitted from the movable body 4b to the destination station 3. The destination station 3 receives the transmission information from the movable body 4b at the close position by wireless communication in the millimeter wave band. This allows the destination station 3 to obtain the desired transmission information. Similarly to the case of performing the wireless communication in the millimeter wave band between the destination station 3 and the movable body 4b, it is necessary that the antenna provided with the destination station 3 and the antenna provided with the movable body 4b approach one another in the appropriate distance and the maximum radiation directions of the respective antennas provided with them are adjusted to be opposed to one another. The movable body 4b uses at least any one of the accurate absolute position or relative position where communication in the millimeter wave band is possible, the information on the gain and directivity of the appropriate millimeter wave band antenna that should be used at the position, and the information of the adequate reception level and the lowest receivable level to adjust own position and the direction of the antenna. Thus, wireless communication in the millimeter wave band is performed with the destination station 3 at the close position.

Note that after receiving this transmission information, the destination station 3 may receive a cryptographic key from the information source station 2 via the public communication network 15. The destination station 3 can open the transmission information based on the received cryptographic key. Thus, when the transmission information itself is information having high confidentiality, a leakage of the information when the information is erroneously transmitted to an unspecified person can be reduced.

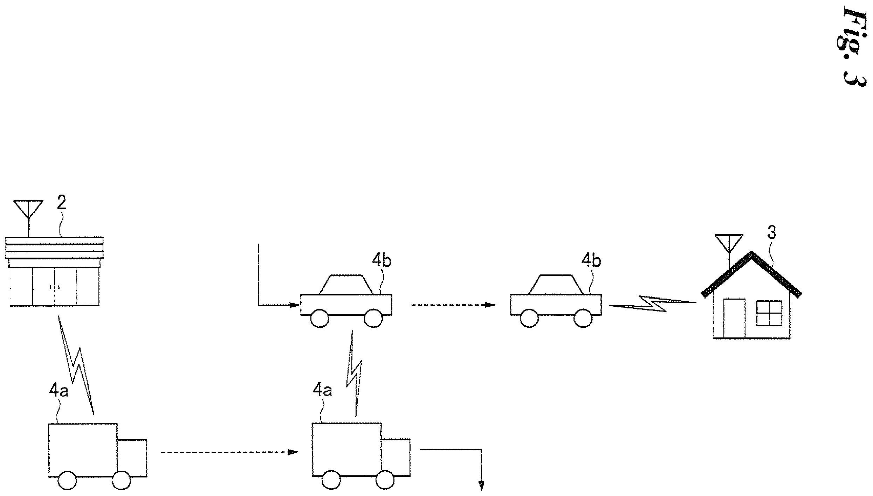

Note that the information transmission system 1 to which the present invention is applied is not limited to the above-described embodiments. For example, as illustrated in Fig. 3, the transmission information may be directly transmitted and received between the movable bodies 4 without via the relay station 5.

In this case, the movable body 4a that temporarily stores the transmission information received from the information source station 2 travels toward the destination while continuing periodically transmitting a beacon signal in the microwave band in the process.

At this time, when the movable body 4a enters within the range of from 100 to 1000 m from the other movable body 4b, since the movable body 4b similarly periodically continues transmitting the beacon packet, the beacon packet transmitted from this movable body 4b is received by the movable body 4a. The movable body 4a can identify the presence of the movable body 4b that relays the transmission information in the proximity thereof from the guide information included in the beacon packet received from the movable body 4b or can identify the position of the movable body 4b.

At this time, the movable body 4b also receives the beacon packet transmitted from the movable body 4a. The type and the name and the destination of the transmission information primarily stored by the movable body 4a can be identified from the beacon packet received by this movable body 4b.

The movable body 4a, and eventually, the driver thereof, determine whether to relay this transmission information to the movable body 4b from the guide information received from the movable body 4b. Similarly, the movable body 4b and eventually the driver thereof determine whether to relay this transmission information from the movable body 4a from the guide information received from the movable body 4a. As a result, in the relationship with the benefit given by the relay, as long as there is an advantage to mutually relay the transmission information, the movable bodies 4a, 4b move in the direction approaching one another, and when they approach one another the close position where the signal in the millimeter wave band can be transmitted and received, the movable body 4a transmits the transmission information in the millimeter wave band to the movable body 4b by wireless communication. Similarly, the movable body 4b that has received the transmission information thereafter travels toward the destination station 3.

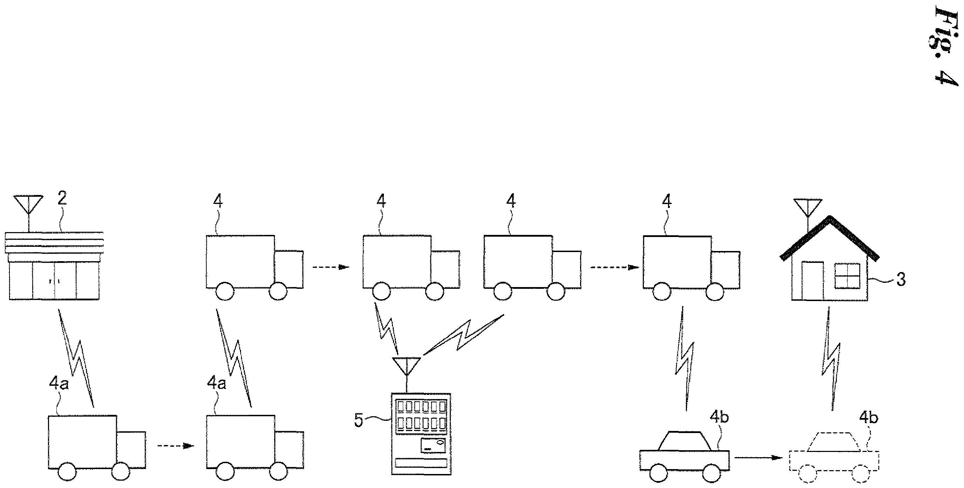

At this time, as illustrated in Fig. 4, the case where the other one or more movable bodies 4 relay this transmission information between the movable body 4a and the movable body 4b is also performed based on the similar processing operation. Obviously, in addition to the case of transmission and reception of the transmission information between the movable bodies 4, the transmission information may be relayed via the relay station 5 as needed in its course.

Additionally, in the information transmission system 1 that applies the present invention, it is not essential that the movable body 4a temporarily storing the transmission information received from the information source station 2 relays the transmission information to another movable body 4 and the relay station 5. Suppose that when the destination of the movable body 4a passes through the destination station 3, the movable body 4a may directly transmit the transmission information to the destination station 3 as is by wireless communication in the millimeter wave band.

In the present invention, the above-described relay and transmission may be performed under further control by the total control server 10.

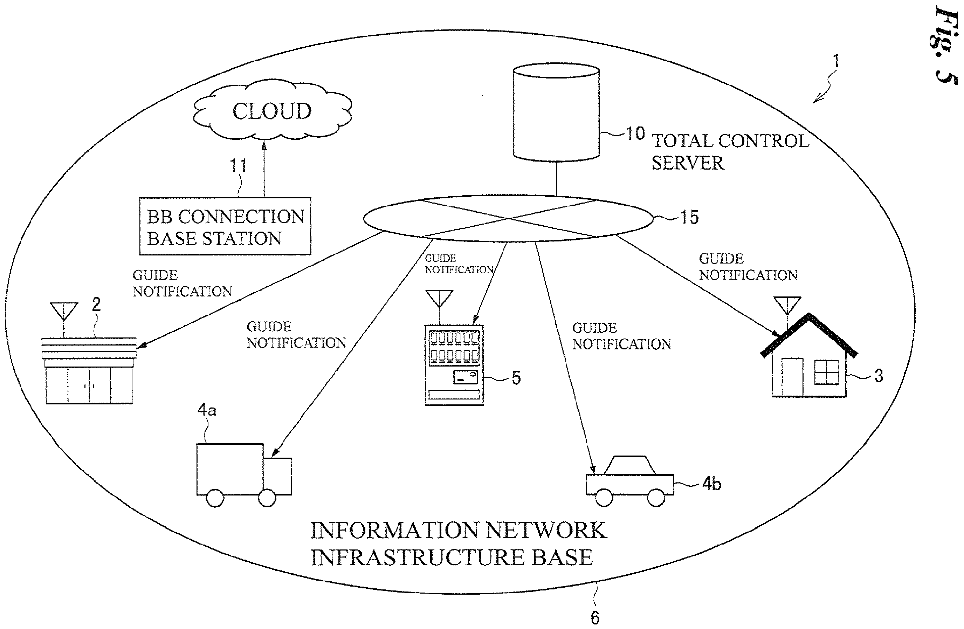

The total control server 10 obtains the location information of the information source station 2, the destination station 3, the relay station 5, and the movable bodies 4 and the respective situations of the transmission information held or temporarily stored by them via the public communication network 15. As illustrated in Fig. 5, the total control server 10 transmits guide notification to the information source station 2, the destination station 3, the relay station 5, and the movable bodies 4 based on the obtained location information and respective situations of the transmission information. This guide notification includes the information to guide the movable bodies 4 to the respective close position of the information source station 2, close position of the destination station 3, and close position of the relay station 5, and, for example, may include information on the relative positional relationships of the close positions to the current positions of the movable bodies 4 and the shortest route.

This allows the movable bodies 4 to be guided to the respective close positions of the information source station 2, the destination station 3, and the relay station 5 with this guide notification, in addition to the guide information in the microwave band. Note that, similar to the case where the movable bodies 4 mutually transmit and receive the transmission information, this total control server 10 allows guiding the movable bodies 4 to the positions approaching one another by continuously transmitting the guide notifications to the mutual movable bodies 4.

In the present invention, when the movable bodies 4 are guided to the respective close position of the information source station 2, close position of the destination station 3, and close position of the relay station 5, it may be all achieved based on the guide notification transmitted from this total control server 10 without use of the guide information in the microwave band.

According to the present invention having the above-described configuration, when the transmission information is transmitted from the information source station 2 to the destination station 3, suppose that, even when the transmission information includes large-capacity content, relaying it via the movable bodies 4 allows high speed transmission at low cost. The relay by the movable bodies 4 is supported based on the guide information included in the beacon packet in the microwave band, and therefore smooth relay can be achieved.

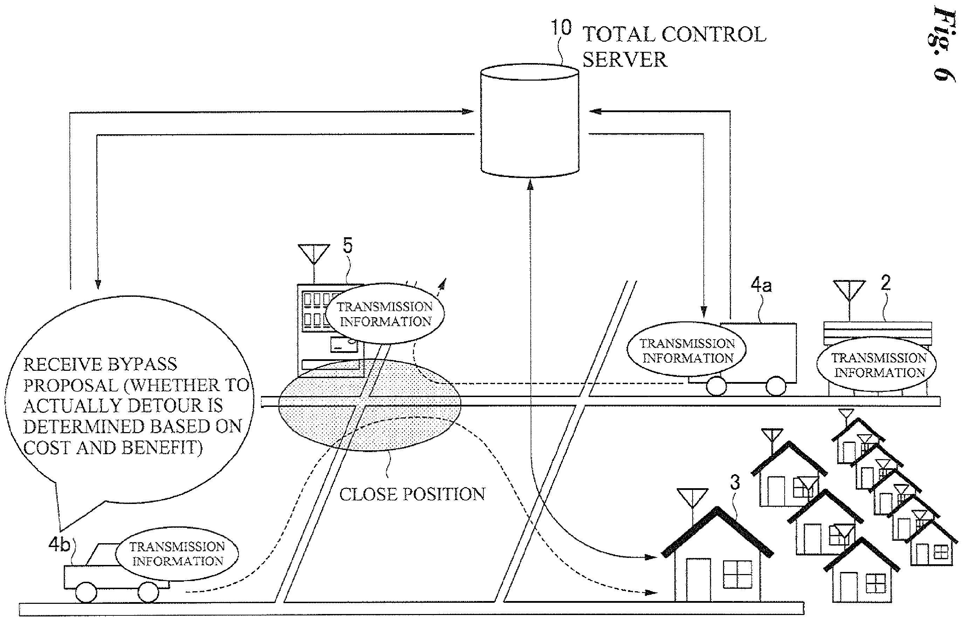

A bypass of the movable bodies 4 especially causes a problem when the movable bodies 4 are in charge of this transmission information. For example, as illustrated in Fig. 6, assume that, in a process of the movable body 4b heading for the destination station 3 as the destination, the transmission information relayed from the movable body 4a to the relay station 5 just now is temporarily stored. In the case, when the movable body 4b receives the guide information included in the beacon packet in the microwave band from the relay station 5 or the guide notification transmitted from the total control server 10, it is considered that the movable body 4b ignores it and directly goes to the destination (the destination station 3) or purposely detours, approaches the close position of the relay station 5, relays the transmission information, and reaches the destination station 3. Although everyone attempts the early arrival at the destination, when the incentive given by relaying the transmission information surpasses it after all, an option that the movable body 4b detours, goes to the relay station 5, and relays the transmission information is made even when the time is slightly more taken. Examples of the possible type of incentive include a point of a credit card and a point of a difference in fueling at a gas station, and including the incentive well allows preferably operating the information network infrastructure base 6.

Incidentally, in the above-described example, the description has been given with an example of periodically transmitting the beacon packet in the microwave band from each of the information source station 2, the destination station 3, the relay station 5, and the movable bodies 4, but the configuration is not limited to this. Instead of transmitting and receiving the beacon packet, the wireless signal in the microwave band may be mutually transmitted and received between the respective information source station 2, destination station 3, relay station 5, and movable bodies 4, and including the above-described guide signal in the wireless signal allows achieving guide control of the movable bodies 4 similar to the above-described degree.

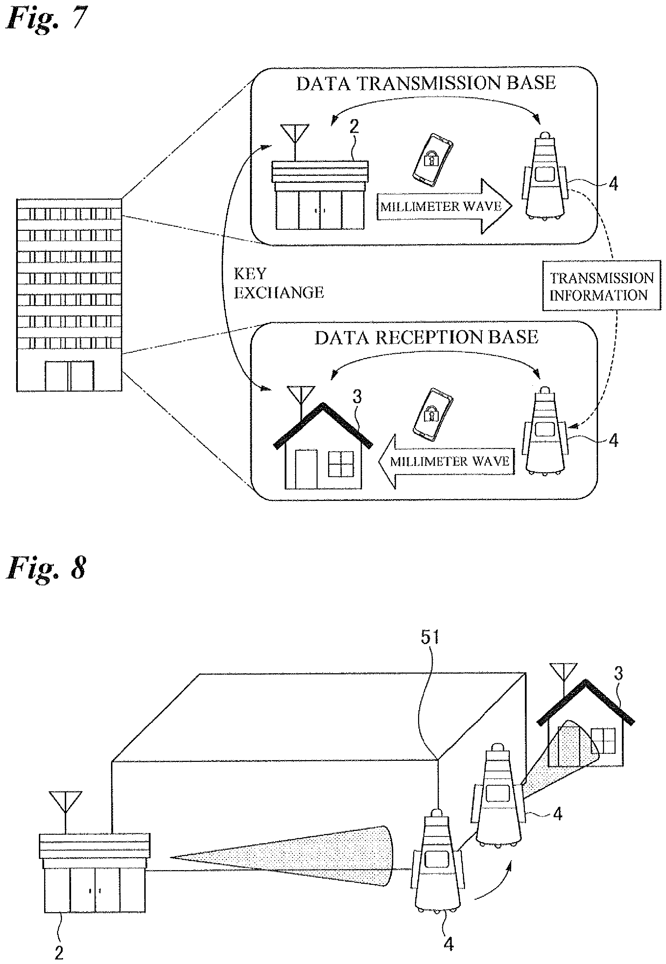

Note that, in the above-described description, a vehicle has been merely described as an example of the movable bodies 4, but the configuration is not limited to this. For example, a robot as illustrated in Fig. 7 may be used as the movable body 4. When a person who wants to collect or distribute information is present in, for example, a hospital, inside a building, such as an office, inside of a station yard, and an underground city, the movable body as the robot can play the role. The person who desires to collect or distribute information causes the movable bodies as a fixed robot and a movable robot at the neighborhood around several hundred meters at the maximum range where a radio wave in microwave reaches to know the fact to operate them.

As illustrated in Fig. 7, the use of the robot as the movable bodies 4, for example, is preferred when the information source station 2 and the destination station 3 are close without the need for using a vehicle, and, for example, is preferred when all of them are in the same building. Similarly, in this case, the movable body 4a as the robot receives the transmission information in the millimeter wave band from the information source station 2. After this movable body 4a directly moves to the destination station 3 or another movable body 4 relays this transmission information, finally, the transmission information is transmitted to the destination station 3 in the millimeter wave band. In the case, the information source station 2 transmits the wireless signal in the microwave band to the movable bodies 4, thus ensuring calling over it. Additionally, when the movable bodies 4 transmit the transmission information to the destination station 3, the position of this destination station 3 can be confirmed through the wireless signal in the microwave band transmitted from the movable bodies 4 and the wireless signal transmitted from the destination station 3. Additionally, since the positions of the information source station 2 and the destination station 3 are close, reception of data can be mutually confirmed through the wireless signal in the microwave band, and key exchange can be performed.

For example, as illustrated in Fig. 8, when there is a corner portion 51 of a wall through which the millimeter wave cannot pass, the transmission information may be transmitted by a bucket brigade method by the movable body 4a constituted by the robot moving from the information source station 2 to the corner portion 51 and the movable body 4b constituted by the robot moving from the corner portion 51 to the destination station 3.

Additionally, not limited to the bucket brigade method, basically, the movable body 4a constituted by the movable robot at the position where millimeter wave communication can be performed directly with the information source station 2 receives the transmission information from the information source station 2, and this movable body 4a moves up to the periphery of the corner portion 51. When the movable body 4b constituted by the movable robot at the position where the millimeter wave communication can be performed directly from this corner portion 51 is present, the movable body 4a transmits the transmission information to this movable body 4b in the millimeter wave band. The movable body 4b that has received the transmission information moves up to the place where the millimeter wave communication can be performed directly with the destination station 3, delivers the transmission information to the destination station 3, and repeats this operation periodically or irregularly, thus ensuring forming a virtually broadband millimeter wave transmission path between the information source station 2 and the destination station 3.

The movable body 4a that has received the transmission information in the millimeter wave band from the information source station 2 moves up to the corner portion 51, and similarly transmits this transmission information to the movable body 4b in the millimeter wave band. The movable body 4b receives this transmission information, moves up to the destination station 3, and passes the transmission information. The movable body 4a and the movable body 4b repeatedly perform this operation. The mutual relay between the movable bodies 4a, 4b, the information source station 2, and the destination station 3 is controlled via the wireless signal in the microwave band mutually transmitted and received similarly as described above.

At this time, the guide information mutually transmitted and received through the microwave band may include any of one or more of information on the mutual positions, the information on the relative distance, the information on receiving sensitivity and reception level of the signal in the millimeter wave band, information on the installation position or the direction of the antenna for wireless communication in the millimeter wave band, information on the relative position and the direction of the antenna as the appropriate communication destination in the case of communications using this and the millimeter wave band, and information on the received power level preferred to be obtained in wireless communication in the millimeter wave band.

The movable bodies 4 perform the processing operation to achieve the wireless communication in the millimeter wave band based on respective pieces of information (any one of more of information on the mutual positions, the information on the relative distance, the information on receiving sensitivity and reception level of the signal in the millimeter wave band, information on the installation position or the direction of the antenna for wireless communication in the millimeter wave band, information on the relative position and the direction of the antenna as the appropriate communication destination in the case of communications using this and the millimeter wave band, and information on the received power level preferred to be obtained in wireless communication in the millimeter wave band) included in the guide information received from the other side.

For example, by receiving the information on the mutual positions and the information on the relative distance, the movable bodies 4 can be moved so as to approach up to the distance where the signal in the millimeter wave band can reach. As this information on the position, information obtained by the information source station 2 or the movable bodies 4 from a GPS or the like or means designed for positioning may be used or information autonomously grasped by, for example, various acceleration sensors, such as a gyro sensor, provided with the movable body may be used. Additionally, the relative distance can be obtained by utilizing a ranging technique, such as laser ranging. Additionally, in addition to the information on the installation position or the direction of the antenna for wireless communication in the millimeter wave band provided with the information source station 2 or the movable bodies 4, by receiving the information on the relative position and the direction of the antenna as the appropriate communication destination for communication using this and the millimeter wave band, the movable bodies 4 can further accurately move to the position where stable millimeter wave communication is achieved with the information source station 2. Further, by receiving the information on the receiving sensitivity and the adequate reception level of the signal in the millimeter wave band, a movable body can finely adjust the position and adjust the direction such that the signal in the millimeter wave band reaches the further appropriate reception level.

By mutually transmitting and receiving the information between the movable bodies 4, while confirming that the directivities of the mutual antennas are appropriately facing and the mutual distance is appropriate or can be improved, the position and the directions of the movable bodies 4 are corrected to be more appropriate and the movable bodies 4 can move.

Note that, in the present invention, when the transmission information is transmitted and received by wireless communication in the millimeter wave band, it may be performed based on the method described below.

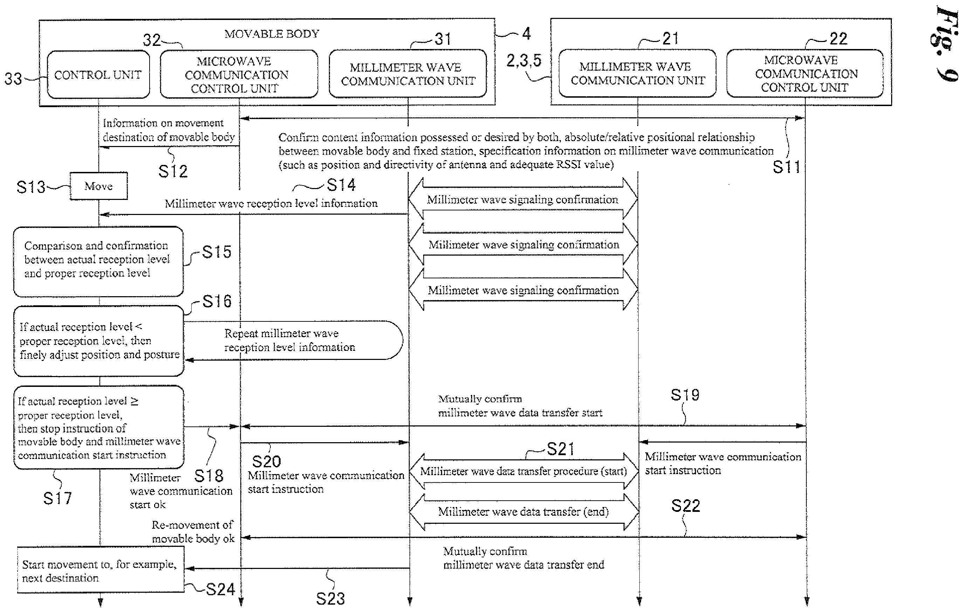

Fig. 9 illustrates a sequence diagram when wireless communication is performed between the movable bodies 4 and the fixed station (the information source station 2, the destination station 3, and the relay station 5). In the following description, an example in which the relay station 5 is applied as the fixed station is employed.

The movable bodies 4 include a millimeter wave communication unit 31 that performs wireless communication in the millimeter wave band, a microwave communication control unit 32 that controls wireless communication in the microwave band, and further a control unit 33 for performing various controls in the movable body 4.

Additionally, the fixed station (the information source station 2, the destination station 3, and the relay station 5) includes a millimeter wave communication unit 21 that performs wireless communication with the movable bodies 4 in the millimeter wave band and a microwave communication control unit 22 that controls the wireless communication in the microwave.

First, at Step S11, for example, content information possessed or desired by both of the movable bodies 4 and the relay station 5, absolute positional relationship or relative positional relationship between the movable bodies 4 and the relay station 5, specification information on communication in the millimeter wave band, the antenna position and directivity, and further the adequate received power level (RSSI value) are confirmed. These confirmation works are performed through wireless communication in the microwave band between the microwave communication control unit 32 and the microwave communication control unit 22.

Next, the process transitions to Step S12, from a microwave communication unit 32 to the control unit 33 in the movable bodies 4, information on the movement destinations that the movable bodies 4 should head for are transmitted. The information on the movement destination indicates the information and the route of the absolute position where the wireless signal in the millimeter wave band can be transmitted and received between the movable bodies 4 and the relay station 5. The control unit 33 receives the information on the movement destinations and moves these movable bodies 4 until the movable bodies 4 reach the distances where the movable bodies 4 can transmit and receive the wireless signal in the millimeter wave band with the relay station 5 (Step S13).

Next, the process transitions to Step S14, and the movable bodies 4 and the relay station 5 perform millimeter wave signaling confirmation that confirms whether they can mutually receive the wireless signal in the millimeter wave band. This millimeter wave signaling confirmation is performed between the millimeter wave communication unit 31 in the movable bodies 4 and the millimeter wave communication unit 21 in the relay station 5 and is repeatedly performed several times as necessary. The millimeter wave communication unit 31 confirms the signal reception level in the millimeter wave band obtained from the other side (the relay station 5) through this millimeter wave signaling confirmation, usually, the communication method is determined between the millimeter wave communication unit 31 and a millimeter wave communication unit 32 according to the signal reception level obtained as described above, and millimeter wave data transfer procedure at S21 starts. However, as illustrated in Fig. 9, automatic transition to S21 may be primarily suspended, the millimeter wave signaling confirmation may be repeated, and the obtained millimeter wave reception level information may be transmitted to the control unit 33.

In the case, next, the process transitions to Step S15, and the actual signal reception level (hereinafter referred to as an actual reception level) in the millimeter wave band and the proper reception level (hereinafter referred to as a proper reception level) are compared and confirmed.

Next, the process transitions to Step S 16, and suppose that the actual reception level < proper reception level is met, since the actual reception level does not reach the proper reception level, this possibly fails to reliably transmit and receive the wireless signal in the millimeter wave band. In this case, positions of the movable bodies 4 are finely adjusted or the direction is finely adjusted, resulting in finely adjusting the orientation of the provided millimeter wave antenna. Additionally, in the process of this fine adjustment as well, the millimeter wave signaling confirmation described above is continued ongoingly and the millimeter wave reception level information on the signal reception level of the millimeter wave band obtained from the other side (the relay station 5) is continuously transmitted from the millimeter wave communication unit 31 to the control unit 33. During the operation at Step S 16, the control unit 33 continues standing by without transmission and reception of the transmission information in the millimeter wave band.

Suppose that the actual reception level ≥ proper reception level is met, since the actual reception level exceeds the proper reception level, continuation of the wireless communication allows reliably transmitting and receiving the wireless signal in the millimeter wave band. In this case, the transmission and reception of the transmission information in the millimeter wave band starts, but for reliable transmission of this, the movements of the movable bodies 4 are once stopped. After the movements of the movable bodies 4 are stopped, the transmission information is transmitted and received in the millimeter wave band.

In this case, the process transitions to Step S18, and the control unit 33 notifies the microwave communication control unit 32 of mediating the communication in the millimeter wave band. The microwave communication control unit 32 confirms that the transmission information is transmitted and received in the millimeter wave band with the microwave communication control unit in the relay station 5 (Step S19). This confirmation is performed through the wireless communications in the microwave band.

Next, the process transitions to Step S20, and the microwave communication control unit 32 in the movable bodies 4 notifies a millimeter wave communication start instruction to instruct the start of transmission and reception of the transmission information in the millimeter wave band to the millimeter wave communication unit 31. Similarly, at the relay station 5 side as well, the microwave communication control unit 22 notifies the millimeter wave communication start instruction to instruct the start of the transmission and reception of the transmission information in the millimeter wave band to the millimeter wave communication unit 21.

Next, the process transitions to Step S21, and the transmission and reception of the transmission information in the millimeter wave band starts between the movable bodies 4 and the relay station 5. After ending the transmission and reception of the transmission information in the millimeter wave band, the process transitions to Step S22, and the microwave communication control unit 32 and the microwave communication control unit 22 mutually confirm data end of the transmission information. After this confirmation, the millimeter wave communication unit 31 performs notification to permit the re-movements of the movable bodies 4 to the control unit 33(Step S23). The control unit 33 that has received this notification starts the movement toward the next destination (Step S24).

By performing the above-described operations, as described at Step S 16, when the actual reception level < proper reception level is met, the control unit 33 continues standing by without transmitting or receiving the transmission information in the millimeter wave band. Thus, quick start of millimeter wave communication without ending the adjustment of the positions of the movable bodies 4 or antenna directivity can be reduced, and delayed transfer completion of the transmission information occurred as a result of this can be reduced.

### DESCRIPTION OF REFERENCE SIGNS

- 1:: Information transmission system
- 2:: Information source station
- 3:: Destination station
- 4:: Movable body
- 5:: Relay station
- 6:: Information network infrastructure base
- 10:: Total control server
- 11:: BB connection base station
- 15:: Public communication network
- 51:: Corner portion

## Claims

1. An information transmission system that transmits information from an information source station to a destination station, the information transmission system comprising:
an information source station that holds transmission information to be transmitted to the destination station; and
movable bodies that are movable and relay the transmission information held by the information source station to the destination station, wherein
the movable bodies include a first movable body and a second movable body, the first movable body receives the transmission information from the information source station at a close position by wireless communication in a millimeter wave band and temporarily stores the transmission information, and the second movable body temporarily stores the transmission information relayed from the first movable body and the first movable body,
the first movable body or the second movable body transmits the temporarily stored transmission information to the destination station at a close position by the wireless communication in the millimeter wave band, and
the information source station, the destination station, and the movable bodies mutually transmit and receive guide information to guide the movable body to a close position of the information source station or a close position of the destination station for the wireless communication of the transmission information in the millimeter wave band through a microwave band.

2. The information transmission system according to claim 1, wherein
the movable bodies:
include one or a plurality of other movable bodies that relay the transmission information stored by the first movable body to the second movable body; and
mutually transmit and receive guide information for guide to mutual close positions through the microwave band to relay the transmission information between the respective movable bodies by the wireless communication in the millimeter wave band.

3. The information transmission system according to claim 1 or 2, further comprising
a relay station that receives the transmission information from the one movable body at a close position by the wireless communication in the millimeter wave band and temporarily stores the transmission information, the relay station relaying the stored transmission information from the other movable body at a close position by transmitting the transmission information by the wireless communication in the millimeter wave band, wherein
the relay station transmits and receives the guide information for guide to the close position with the one movable body or the other movable body through the microwave band.

4. The information transmission system according to any one of claims 1 to 3, wherein
the movable body is a vehicle that includes a guide display unit to guide a driver to the close position based on the received guide information, or a vehicle that includes a movement guide unit to promote autonomous movement to the close position based on the received guide information.

5. The information transmission system according to claim 3, further comprising
a total control server configured to obtain location information of the information source station, the destination station, the relay station, and the movable bodies and respective situations of the transmission information held or temporarily stored by the information source station, the destination station, the relay station, and the movable bodies, wherein
the total control server transmits guide notification for guide to respective close position of the information source station, close position of the destination station, and close position of the relay station based on the obtained location information and respective situations of the transmission information.

6. The information transmission system according to claim 1 or 3, wherein
each of the movable bodies that relays the transmission information is constituted by a movable robot, the guide information mutually transmitted and received through the microwave band includes any of one or more of information on a mutual distance, information on receiving sensitivity and a reception level of a signal in the millimeter wave band, information on an installation position or a direction of an antenna for the wireless communication in the millimeter wave band, and information on a received power level of the wireless communication in the millimeter wave band, and each of the movable bodies performs a processing operation to achieve the wireless communication in the millimeter wave band based on each piece of the information included in the guide information received from another side.
